(19) Europäisches Patentamt
European Patent Office
Office européen des brevets

(11) **EP 3 298 266 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(21) Anmeldenummer: **16710984.2**

(22) Anmeldetag: **22.03.2016**

(51) Int Cl.:
***F02M 65/00*** *(2006.01)*

(86) Internationale Anmeldenummer:
**PCT/EP2016/056191**

(87) Internationale Veröffentlichungsnummer:
**WO 2016/188647 (01.12.2016 Gazette 2016/48)**

(54) **VORRICHTUNG ZUR MESSUNG DER EINSPRITZRATE SOWIE MESSVERFAHREN**

DEVICE FOR MEASURING THE INJECTION RATE AND MEASURING METHOD

DISPOSITIF DE MESURE DU TAUX D'INJECTION ET PROCÉDÉ DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2015 DE 102015209398**

(43) Veröffentlichungstag der Anmeldung:
**28.03.2018 Patentblatt 2018/13**

(73) Patentinhaber: **Robert Bosch GmbH**
**70442 Stuttgart (DE)**

(72) Erfinder:
• **MAJER, Clemens**
**74379 Ingersheim (DE)**
• **FISCHER, Thomas**
**70499 Stuttgart (DE)**
• **SANDER, Wolfgang**
**71287 Weissach (DE)**
• **HARTUNG, Iris**
**73614 Schorndorf (DE)**

(56) Entgegenhaltungen:
DE-A1-102008 040 628     JP-A- 2014 224 466
JP-B2- 3 077 775

## Beschreibung

Die Erfindung betrifft die Funktionsprüfung und Qualitätskontrolle von Einspritzventilen, insbesondere für Fahrzeugkraftstoffe.

Stand der Technik

Die Verbrauchs- und Umwelteigenschaften von Dieselmotoren können wesentlich verbessert werden, wenn der Kraftstoff nach einem genauen Zeitprogramm in den Brennraum eingespritzt wird. Insbesondere ist es wünschenswert, mehrere Portionen Kraftstoff in schneller Folge nacheinander einzuspritzen.

Um das Zeitprogramm präzise steuern zu können, ist eine Kenntnis der zeitlichen Übertragungsfunktion wünschenswert, mit der das Einspritzventil (Injektor) eine elektrische Ansteuerung in einen Massenstrom an Kraftstoff umsetzt. Hierbei ist insbesondere der Zeitverzug zwischen dem Beginn der elektrischen Ansteuerung (elektrischer Spritzbeginn) und dem Beginn des Massenstroms (hydraulischer Spritzbeginn) von Interesse.

Für derartige Messungen haben sich hydraulische Druckanstiegsanalysatoren sehr bewährt. Beispiele für solche Apparaturen sind aus der DE 10 249 754 A1 und aus der DE 10 2005 056 153 A1 bekannt. Über das zu charakterisierende Einspritzventil wird eine Prüfflüssigkeit unter Druck in ein abgeschlossenes, ebenfalls mit Prüfflüssigkeit gefülltes Messvolumen eingespritzt. Dadurch erhöht sich der Druck im Messvolumen, der über einen Sensor registriert wird. Aus dem zeitlichen Druckverlauf ergibt sich unmittelbar die eingespritzte Masse und durch zeitliche Ableitung die Einspritzrate als Massenstrom. Hieraus lässt sich insbesondere der hydraulische Spritzbeginn ablesen.

Die JP 2014 224466 A offenbart eine Injektionsmessvorrichtung zur Berechnung eines Volumenelastizitätsmoduls. Dazu ist ein geschlossenes Gefäß mit Brennstoff gefüllt und mit zwei Drucksensoren ausgestattet, um eine Druckänderung in dem geschlossenen Behälter zu erfassen. Eine Verzögerungszeit-Berechnungseinheit berechnet die Differenz der Ankunftszeit der durch die Kraftstoffeinspritzung erzeugten Druckwellen bei den beiden Drucksensoren. Aus dieser Differenz der Ankunftszeit wird die Schallgeschwindigkeit im Brennstoff ermittelt und daraus das Volumenelastizitätsmodul. Aus dem Volumenelastizitätsmodul wird die Einspritzmenge und daraus die Einspritzrate ermittelt.

Aufgabe und Lösung

Aufgabe der vorliegenden Erfindung ist, die bekannten hydraulischen Druckanstiegsanalysatoren weiter zu entwickeln. Diese Aufgabe wird erfindungsgemäß gelöst durch eine Vorrichtung gemäß Hauptanspruch 1 sowie durch ein Verfahren gemäß unabhängigem Anspruch 9.

Weitere vorteilhafte Ausgestaltungen ergeben sich aus den darauf rückbezogenen Unteransprüchen.

Offenbarung der Erfindung

Im Rahmen der Erfindung wurde eine Vorrichtung zur Messung der Einspritzrate $dm(t)/dt$ eines Einspritzventils für ein Fluid entwickelt. $m(t)$ ist die von der Zeit $t$ abhängige Einspritzmenge dieses Fluids. Die Vorrichtung umfasst ein Messvolumen, das allseitig abgeschlossen und mit einem Prüffluid gefüllt ist. In einer Wandung des Messvolumens ist eine Öffnung zur Aufnahme des Einspritzventils vorgesehen, so dass das Einspritzventil in Einbaulage mit wenigstens einer Einspritzöffnung in das Messvolumen hineinragt. Im Messvolumen ist ein Drucksensor angeordnet.

Das Fluid kann eine Flüssigkeit oder ein Gas sein. Das Prüffluid kann ebenfalls eine Flüssigkeit oder ein Gas sein. Es kann von dem Fluid, zu dessen Einspritzung das Einspritzventil ausgebildet ist, verschieden sein, in einer vorteilhaften Ausgestaltung der Erfindung aber auch mit diesem Fluid identisch sein.

Erfindungsgemäß sind Korrekturmittel zur Bestimmung der Laufzeit einer von der Einspritzöffnung ausgehenden, sich durch das Prüffluid ausbreitenden Druckwelle zum Drucksensor sowie zur Korrektur der gemessenen Einspritzrate $dm(t)/dt$ unter Berücksichtigung dieser Laufzeit zu einer bereinigten Einspritzrate $dm'(t)/dt$ vorgesehen.

Bereits die Berücksichtigung einer mittleren, konstanten Laufzeit sowie vorteilhaft eine Korrektur von Filtereffekten eines eventuell vorhandenen Tiefpassfilters, der die vom Drucksensor gelieferten Messwerte entrauscht, vermindern einen systematischen Versatz der gemessenen zeitabhängigen Einspritzrate $dm(t)/dt$ entlang der Zeitachse. Die Erfinder haben außerdem erkannt, dass die Laufzeit nicht konstant ist. Sie wird durch die lokale Schallgeschwindigkeit im Prüffluid entlang der Strecke von der Einspritzöffnung zum Drucksensor bestimmt. Diese lokale Schallgeschwindigkeit ist druck- und temperaturabhängig. Da sich im Prüffluid ausgehend von der Einspritzöffnung eine Druckwelle ausbreitet und dem Messvolumen am Ort der Einspritzöffnung lokal Energie zugeführt wird, sind Temperatur und Druck des Prüffluids innerhalb des Messvolumens inhomogen verteilt und insbesondere entlang der Strecke von der Einspritzöffnung zum Drucksensor nicht konstant. Insbesondere ist die lokale Schallgeschwindigkeit während einer Einspritzung eine andere als vor und nach der Einspritzung. Daher sind die Korrekturmittel gemäß der Erfindung zur Bestimmung der mittleren Schallgeschwindigkeit $c_m$ auf der Strecke von der Einspritzöffnung zum Drucksensor während mindestens einer Einspritzung ausgebildet.

Zur Bestimmung der mittleren Schallgeschwindigkeit $c_m$ beinhalten die Korrekturmittel gemäß der Erfindung ein Kennfeld, das die mittlere Schallgeschwindigkeit $c_m$ auf der Strecke von der Einspritzöffnung zum Drucksensor als Funktion des Drucks $p$ im Messvolumen in Kombination mit einer weiteren Größe angibt. Diese weitere Größe kann die Temperatur T im Messvolumen sein. Diese Temperatur T lässt sich jedoch wiederum durch andere Größen ausdrücken. Die Temperatur T ergibt sich beispielsweise aus der Einspritzmenge m in Verbindung mit der Temperatur $T_{rail}$ und/oder dem Druck $p_{rail}$ des Fluids vor dem Eintritt in das Einspritzventil. Somit kann das Kennfeld die mittlere Schallgeschwindigkeit $c_m$ nicht nur als Funktion von p und T, sondern beispielsweise auch als Funktion von p, m und $T_{rail}$ oder auch als Funktion von p, m und $p_{rail}$ angeben. Der funktionale Zusammenhang zwischen den genannten Größen und der mittleren Schallgeschwindigkeit ist jeweils durch die Geometrie des Messvolumens und durch die Materialeigenschaften des Prüffluids vorgegeben. In einer gegebenen Vorrichtung mit einem gegebenen Messvolumen ist dessen Geometrie fest. Prüffluide werden gemäß genauer Spezifikationen mit sehr engen Toleranzen hergestellt, so dass die Materialeigenschaften der Prüffluide ebenfalls als definiert angenommen werden können. Insbesondere ist die funktionale Abhängigkeit der Dichte derartiger Prüffluide vom Druck und von der Temperatur bekannt. Daher lässt sich für eine gegebene Geometrie des Messvolumens und ein gegebenes Prüffluid das Kennfeld vorab berechnen und hat dann für alle mit diesem Messvolumen in Kombination mit diesem Prüffluid durchgeführten Messungen Gültigkeit.

Dabei kann sich die Wahl der Größen, von denen die mittlere Schallgeschwindigkeit $c_m$ gemäß Kennfeld abhängt, vorteilhaft danach richten, mit welcher zeitlichen Auflösung die jeweiligen Größen zur Verfügung stehen. Da der Einspritzvorgang ein dynamischer Vorgang ist, ändert sich die lokale Schallgeschwindigkeit auf der Strecke von der Einspritzöffnung zum Drucksensor nicht nur mit dem Ort, sondern auch mit der Zeit. Dies kann dazu führen, dass die gemessene zeitabhängige Einspritzrate dm(t)/dt bezüglich der Laufzeitkorrektur zu Beginn und Ende der Einspritzung eine unterschiedliche Zeitverschiebung entsprechend der zeitabhängigen mittleren Schallgeschwindigkeit $c_m(t)$ zur Berechnung der realen Einspritzrate dm'(t)/dt enthält.

In einer besonders vorteilhaften Ausgestaltung der Erfindung ist eine Auswerteeinheit zur Filterung von Rauschen aus den Messwerten des Drucksensors zwischen den Drucksensor und die Korrekturmittel geschaltet. Diese Auswerteeinheit kann insbesondere einen Tiefpassfilter enthalten. Ein solcher Tiefpassfilter verschiebt die Messwerte auf der Zeitachse. Daher sind die Korrekturmittel in einer weiteren besonders vorteilhaften Ausgestaltung der Erfindung dazu ausgebildet, eine durch die Filterung bewirkte zeitliche Verschiebung der Messwerte des Drucksensors zumindest teilweise zu kompensieren. Die Stärke dieser Kompensation kann beispielsweise von der Einspritzmenge m, von der Temperatur $T_{rail}$ vor dem Eintritt des Fluids in das Einspritzventil oder vom Druck $p_{rail}$ vor dem Eintritt des Fluids in das Einspritzventil abhängen.

Vorteilhaft sind zusätzlich Mittel zur Bestimmung des hydraulischen Spritzbeginns $t'_{S,hydr}$ des Einspritzventils aus der bereinigten Einspritzrate dm'(t)/dt vorgesehen. Diese Mittel können beispielsweise dazu ausgebildet sein, Rauschen aus den Werten für die bereinigte Einspritzrate dm'(t)/dt herauszufiltern oder eine Ausgleichskurve durch streuende Werte dieser bereinigten Einspritzrate dm'(t)/dt zu legen. Auf diese Weise kann der Fehler bei der Bestimmung des hydraulischen Spritzbeginns $t_{S,hydr}$, der die am meisten interessierende Messgröße bei der Charakterisierung von Einspritzventilen ist, vermindert werden.

Vorteilhaft ist zusätzlich mindestens ein Ultraschallsensor zur Bestimmung der mittleren Schallgeschwindigkeit $c_{m,mess}$ im Prüffluid vor und/oder nach der Einspritzung im Messvolumen angeordnet. Dieser Ultraschallsensor kann insbesondere als Sender für Schallwellen und zugleich auch als Empfänger für Schallwellen ausgebildet sein, die an einer gegenüberliegenden Wandung des Messvolumens reflektiert werden. Mit der mittleren Schallgeschwindigkeit $c_{m,mess}$ kann zwischen der insgesamt eingespritzten Masse an Fluid und der dadurch bewirkten Änderung des Drucks p im Messvolumen umgerechnet werden. Dieser Zusammenhang hat die Form einer Bilanzgleichung.

Erfindungsgemäß wird das Kennfeld durch eine fluiddynamische Simulation der zeit- und ortsabhängigen lokalen Schallgeschwindigkeit c(t,x) in einem Teilvolumen des Messvolumens, das mindestens die Strecke von der Einspritzöffnung zum Drucksensor umfasst, bestimmt. Diese Simulation geht von mindestens einer zeitabhängigen Randbedingung für den Druck p im Messvolumen und/oder für die Einspritzmenge m aus. Durch Integration über alle Orte x entlang der Stecke von der Einspritzöffnung zum Drucksensor kann aus dieser Simulation die mittlere Schallgeschwindigkeit $c_m$ auf dieser Strecke ermittelt werden.

Es wurde erkannt, dass der Aufwand für die Ermittlung des Kennfeldes für eine Geometrie des Messvolumens in Kombination mit einem konkreten Prüffluid nur ein einziges Mal anfällt. Es kann dann eine beliebig große Serie an Vorrichtungen hergestellt werden, bei denen das Messvolumen die gleiche Geometrie aufweist. Das einmal ermittelte Kennfeld kann in allen Vorrichtungen dieser Serie in identischer Form integriert sein. Da die Geometrie des Messvolumens sich im Betrieb nicht ändert und auch ein Nachschub an Prüffluid mit immer gleichen Eigenschaften zur Verfügung steht, ist in der Regel im Betrieb der Vorrichtung keine Neuberechnung des Kennfeldes notwendig.

Vorteilhaft reicht das Teilvolumen des Messvolumens, innerhalb dessen die zeit- und ortsabhängige lokale Schallgeschwindigkeit c(t,x) bestimmt wird, bis zu einer Wandung des Messvolumens. Die Simulation berücksichtigt dann eine zumindest teilweise Reflektion der von der Einspritzöffnung ausgehenden Druckwelle an dieser Wandung. Auf diese Weise kann berücksichtigt werden, dass auf der Strecke von der Einspritzöffnung zum Drucksensor die von der Einspritzöffnung ausgehende Druckwelle mit einer oder mehreren Reflexionen ihrer selbst konstruktiv und/oder destruktiv interferieren kann.

In einer weiteren besonders vorteilhaften Ausgestaltung der Erfindung berücksichtigt die Simulation das Vorhandensein und/oder eine Ausbildung von Kavitation im Prüffluid. Beispielsweise kann es entlang des Strömungspfades eines flüssigen Kraftstoffs an bestimmten Stellen zu Kavitations- bzw. Dampfblasen kommen, insbesondere wenn der Kraftstoff wieder entspannt wird. Beim Einspritzen dieses Kraftstoffs in das Messvolumen entstehen lokale Druckschwankungen, wobei im Bereich lokaler Druckminima weitere Dampfblasen entstehen können. Weiterhin entstehen beim Einspritzen in das Messvolumen auch lokale Wirbel, die im Wege der Scherschichtkavitation weitere Dampfblasen erzeugen können.

In einer weiteren besonders vorteilhaften Ausgestaltung der Erfindung berücksichtigt die Simulation eine Temperaturabhängigkeit und/oder eine Druckabhängigkeit der Viskosität und/oder des Kompressionsmoduls des Prüffluids und/oder der Schallgeschwindigkeit im Prüffluid. Diese Phänomene sind die Hauptursachen dafür, dass die mittlere Schallgeschwindigkeit $c_m$ auf der Strecke von der Einspritzöffnung zum Drucksensor während des Einspritzvorgangs gegenüber der mittleren Schallgeschwindigkeit $c_{m,mess}$ im Prüffluid vor und/oder nach der Einspritzung verändert ist.

Nach dem zuvor Gesagten bezieht sich die Erfindung auch auf ein Verfahren zur Messung der Einspritzrate dm(t)/dt eines Einspritzventils für ein Fluid. m(t) ist die zeitabhängige Einspritzmenge. Das Verfahren geht aus von einem Messvolumen, das allseitig abgeschlossen ist und mit einem Prüffluid gefüllt ist. Das Messvolumen weist eine Öffnung in einer Wandung des Messvolumens zur Aufnahme des Einspritzventils auf, so dass das Einspritzventil in Einbaulage mit wenigstens einer Einspritzöffnung in das Messvolumen hineinragt. Weiterhin ist im Messvolumen ein Drucksensor angeordnet. Mit diesem Drucksensor wird der zeitliche Verlauf des Drucks im Messvolumen als Reaktion auf ein Zeitprogramm I(t) der Ansteuerung des Einspritzventils gemessen.

Erfindungsgemäß wird mit hierzu ausgebildeten Korrekturmitteln die Laufzeit einer von der Einspritzöffnung ausgehenden, sich durch das Prüffluid ausbreitenden Druckwelle zum Drucksensor bestimmt. Die gemessene Einspritzrate dm(t)/dt wird um den Einfluss dieser Laufzeit zu einer Einspritzrate dm'(t)/dt bereinigt.

Sämtliche für die Vorrichtung gegebene Offenbarung gilt ausdrücklich auch für das Messverfahren und umgekehrt.

Weitere, die Erfindung verbessernde Maßnahmen werden nachstehend gemeinsam mit der Beschreibung der bevorzugten Ausführungsbeispiele der Erfindung anhand von Figuren näher dargestellt:

Ausführungsbeispiele

Es zeigt:

Figur 1     Ausführungsbeispiel der erfindungsgemäßen Vorrichtung;

Figur 2     gemessene Einspritzrate dm(t)/dt auf ein Zeitprogramm I(t) der elektrischen Ansteuerung eines Injektors;

Figur 3     mit der Vorrichtung gemäß Figur 1 erzielbare Verbesserung der Messgenauigkeit bei der Bestimmung der Einspritzrate dm(t)/dt;

Figur 4     Anwendungsbeispiel für die Nutzung einer erfindungsgemäßen Vorrichtung zur Optimierung des Einspritzvorgangs in einen Dieselmotor bei vorgelagerter Voreinspritzung.

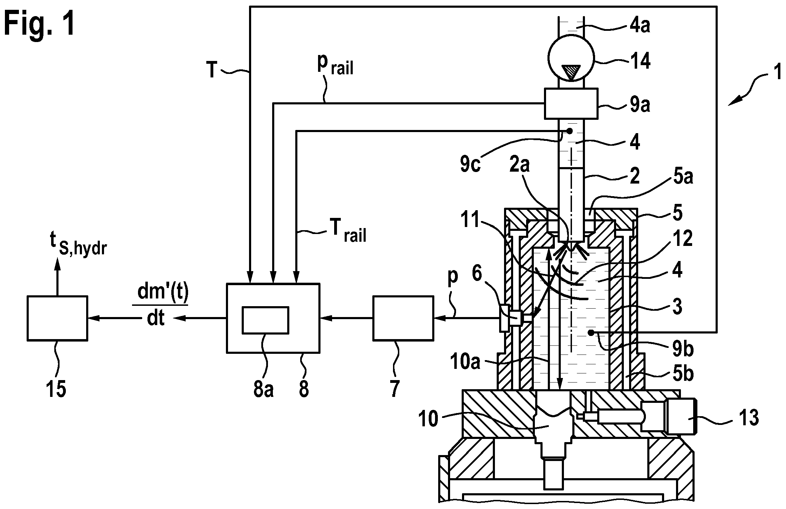

Figur 1 zeigt ein Ausführungsbeispiel der erfindungsgemäßen Vorrichtung 1. Das Messvolumen 3 ist von einer Wandung 5, die Kühlkanäle 5b enthält, allseitig umschlossen. Das Messvolumen 3 ist mit dem Prüffluid 4 gefüllt. Die Wandung 5 des Messvolumens 3 weist eine Öffnung 5a zur Aufnahme des zu prüfenden Einspritzventils 2 auf. Das Einspritzventil 2 ist in Einbaulage dargestellt, in der es mit einer Einspritzöffnung 2a in das Messvolumen 3 hineinragt. Das Einspritzventil 2 wird über eine Hochdruckpumpe 14 mit dem einzuspritzenden Fluid 4a versorgt. Das Fluid 4a ist in diesem Ausführungsbeispiel mit dem Prüffluid 4 identisch.

Im Messvolumen 3 ist ein Drucksensor 6 angeordnet, der den Druck p im Messvolumen 3 an eine Auswerteelektronik 7 übermittelt. In der Auswerteelektronik 7 wird das Rohsignal zunächst verstärkt und anschließend mit einem Tiefpassfilter gefiltert, um Rauschen zu beseitigen. Das gefilterte Signal wird an die Korrektureinheit 8 weitergereicht.

Die Korrektureinheit 8 erhält als zusätzliche Eingangsgrößen

•  den Druck $p_{rail}$ des Fluids 4a vor dem Eintritt in das Einspritzventil 2, gemessen mit einem Drucksensor 9a;

•  die Temperatur T im Messvolumen 3, gemessen mit einem im Messvolumen 3 angeordneten Temperatursensor 9b;

•  sowie die Temperatur $T_{rail}$ des Fluids 4a vor dem Eintritt in das Einspritzventil 2, gemessen mit einem weiteren Temperatursensor 9c.

Die Korrektureinheit 8 ist dazu ausgebildet, die Laufzeit einer von der Einspritzöffnung 2a ausgehenden, sich durch das Prüffluid 4 ausbreitenden Druckwelle 12 zum Drucksensor 6 zu bestimmen. Zur Bestimmung der mittleren Schallgeschwindigkeit $c_m$ auf der Strecke 11 von der Einspritzöffnung 2a zum Drucksensor 6 verfügt die Korrektureinheit 8 über ein Kennfeld 8a, das die mittlere Schallgeschwindigkeit $c_m$ auf der Strecke 11 als Funktion der Drücke $p$ und $p_{rail}$ sowie der Temperaturen $T$ und $T_{rail}$ angibt. Die Korrektureinheit 8 bereinigt die gemessene zeitabhängige Einspritzrate $dm(t)/dt$ um den Einfluss der Laufzeit sowie um filterabhängige zeitliche Verschiebungen und gibt die so bereinigte Einspritzrate $dm'(t)/dt$ an eine weitere Auswerteeinheit 15 weiter, die den hydraulischen Spritzbeginn $t_{S,hydr}$ ermittelt.

Im Messvolumen 3 ist zusätzlich ein Ultraschallsensor 10 angeordnet, der entlang eines durch Pfeile symbolisierten Weges 10a Schallwellen durch das gesamte Messvolumen 3 bis zur gegenüberliegenden Wandung 5 sendet und die Reflektion von dieser Wandung 5 auf dem gleichen Wege 10a auch wieder empfängt. Mit diesem Ultraschallsensor 10 wird die mittlere Schallgeschwindigkeit $c_{m,mess}$ im Prüffluid 4 vor und nach der Einspritzung ermittelt. Das Messvolumen 3 verfügt weiterhin über ein elektromagnetisch betätigbares Entleerungsventil 13.

Das Messvolumen 3 ist zylindrisch mit einer Höhe von 80 mm und einem Durchmesser von 45 mm. Die Druckwelle 12 muss von der Einspritzöffnung 2a bis zum Drucksensor 6 daher eine Strecke 11 von 46,3 mm zurücklegen. Für eine vereinfachend als konstant angenommene mittlere Temperatur $T$ im Messvolumen 3 sowie Dieselkraftstoff bzw. ein zur Prüfung von Dieseleinspritzventilen verwendetes Prüföl als Prüffluid 4 errechnet sich bei einem Basisdruck $p$ im Messvolumen 3 vor der Einspritzung von 50 bar eine Schallgeschwindigkeit von $c = 1277$ m/s. Die Druckwelle 12 benötigt dann etwa 37 $\mu$s, um die Strecke 11 zurückzulegen.

Damit die Korrektureinheit 8 die Laufzeit genauer bestimmen kann, wurde das in ihr hinterlegte Kennfeld 8a durch eine fluiddynamische Simulation ermittelt. Hierzu wurde vom Messvolumen 3 ein Teilvolumen ausgewählt, das genauso hoch ist wie das Messvolumen 3 und in azimutaler Richtung sowohl die Einspritzöffnung 2a als auch den Drucksensor 6 vollständig abdeckt. Innerhalb dieses Teilvolumens wurden neben der lokalen Schallgeschwindigkeit $c(t,\mathbf{x})$ auch die zeit- und ortsabhängigen Verteilungen $p(t,\mathbf{x})$ des Drucks im Messvolumen 3, $T(t,\mathbf{x})$ der Temperatur im Messvolumen 3, $v(t,\mathbf{x})$ der vektoriellen Strömungsgeschwindigkeit im Messvolumen 3 sowie $d(t,\mathbf{x})$ des Dampfanteils am Prüffluid 4 im Messvolumen 3 berechnet. Treibende Kraft für die Dynamik dieser Größen ist das durch den Einspritzvorgang am Ort der Einspritzöffnung 2a vorgegebene Zeitprogramm für den lokalen Druck des Prüffluids 4. Bei der Berechnung wurden neben der Geometrie des Messvolumens 3 auch die Druck- und Temperaturabhängigkeit von Viskosität, Schallgeschwindigkeit und Kompressionsmodul des Prüffluids 4 berücksichtigt. Das Einspritzventil 2 verfügt neben der Einspritzöffnung 2a noch über sieben weitere Einspritzöffnungen. Da alle acht Einspritzöffnungen rotationssymmetrisch entlang des Außenumfangs des Einspritzventils 2 verteilt sind, ist es für die Simulation ausreichend, nur eine Einspritzöffnung 2a zu betrachten. Das Funktionieren der Erfindung ist nicht an eine konkrete Anzahl Einspritzöffnungen gebunden; die Angabe einer Anzahl von acht ist somit lediglich als Illustration des hier gezeigten Ausführungsbeispiels zu verstehen.

Die Simulation wurde für 15 Temperaturen $T$ im Bereich von 40 °C bis 180 °C sowie für 30 Drücke $p_{rail}$ von 100 bis 3.000 bar durchgeführt. Der Temperaturbereich von 40 °C bis 180 °C repräsentiert den Bereich, in dem sich die Temperatur $T$ im Messvolumen 3 in diesem Ausführungsbeispiel bewegen kann. Das Kennfeld 8a in der Korrektureinheit 8 enthält daher für die 450 verschiedenen Wertepaare aus Druck $p_{rail}$ sowie Temperatur $T$ jeweils die zugehörige mittlere Schallgeschwindigkeit $c_m$ ($p_{rail}$, $T$). Es wurden Einspritzmengen $m$ betrachtet, die einem Volumen an Fluid 4a im Bereich von 1 mm$^3$ bis 600 mm$^3$ entsprechen, mit einer Schrittweite von 20 mm$^3$. Aus $p_{rail}$ und $T$ ergibt sich die Temperatur $T_{rail}$ des Fluids 4a unmittelbar vor der Einspritzung in das Messvolumen 3. Damit liegt auch die Temperatur $T_{inj}$ fest, die das eingespritzte Fluid 4a hat, nachdem es in das Messvolumen 3 eingetreten ist und sich vom Druck $p_{rail}$ auf den im Messvolumen 3 herrschenden geringeren Druck $p$ entspannt hat. Die Temperatur $T_{inj}$ und die Einspritzmenge $m$ (in der Einheit der Masse) legen schließlich den Energieeintrag in das Messvolumen 3 durch die Einspritzung fest.

Da das aus dem Messvolumen 3 ausgewählte Teilvolumen fein genug diskretisiert wurde, um auch Kavitation im Prüffluid 4 erfassen zu können, beanspruchte die Simulation eines Kennfeldpunkts eine Rechenzeit von etwa drei Wochen (6000 CPU-Stunden) auf einem parallelisierten HPC-System basierend auf der Intel XEON-Architektur. Die Simulation wurde mit dem Programm Ansys-CFX durchgeführt. Die entsprechend des Auswerteverfahrens der hydraulischen Druckanstiegsmethode aus Druckverläufen am Drucksensor 6 der Simulation ermittelten Verläufe der realen Einspritzrate $dm'(t)/dt$ wurden mit Messungen verglichen, um das Modell zu verifizieren.

Die reale Einspritzrate $dm'(t)/dt$ hängt mit der Größe $V$ des Messvolumens 3, dem Druck $p$ und der Temperatur $T$ im Messvolumen 3 sowie der mittleren Schallgeschwindigkeit $c_m$ im Messvolumen 3 über

$$\frac{dm'(t)}{dt} = \frac{d}{dt}\left( V \cdot \int_{p_1}^{p_2} \frac{1}{c_m^2(p,T)} dp \right)$$

zusammen, worin $p_1$ der Druck $p$ zu Beginn der Einspritzung und $p_2$ der Druck $p$ zur Zeit $t$ ist.

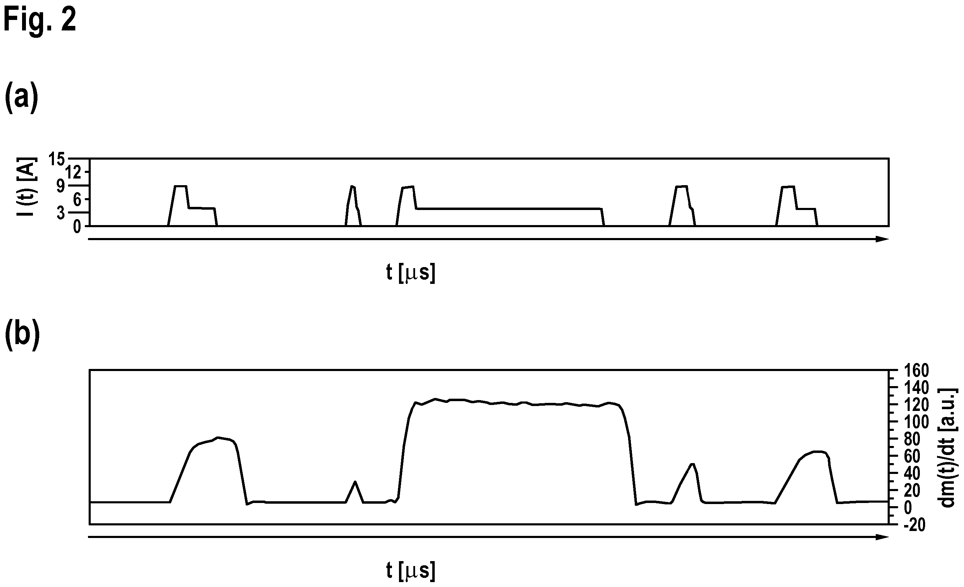

In Figur 2a ist beispielhaft ein Zeitverlauf I(t) des Stroms, mit dem ein elektromagnetisch gesteuertes Einspritzventil 2 (Injektor) angesteuert wird, über der Zeit t aufgetragen. In Figur 2b ist über der gleichen Zeitskala die gemessene Einspritzrate dm(t)/dt in willkürlichen Einheiten aufgetragen. Bei dieser Messung war die Korrektureinheit 8 deaktiviert. Dass die Laufzeit der Druckwelle 12 von der Einspritzöffnung 2a zum Drucksensor 6 somit nicht berücksichtigt wurde, hat zum Einen die Wirkung, dass die Einspritzrate dm(t)/dt auf der Zeitachse gegenüber dem Zeitprogramm I(t) des Stroms versetzt ist. Zum Anderen schlagen sich einige schnelle Änderungen im Strom I(t) überhaupt nicht in der gemessenen Einspritzrate dm(t)/dt nieder, da die lokale Schallgeschwindigkeit $c(t,x)$ im Prüffluid 4 von den dynamischen Bedingungen im Messvolumen 3 abhängt und die dynamischen Bedingungen wiederum zeitabhängig sind. Außerdem wirken sich noch Filtereigenschaften des Tiefpassfilters in der Auswerteelektronik 7 auf die Lage des hydraulischen Spritzbeginns im Ratensignal aus. Die gemessene Einspritzrate dm(t)/dt ergibt sich daher aus der wahren Einspritzrate dm'(t)/dt durch den Einfluss der Laufzeit auf der Strecke 11 von der Einspritzöffnung 2a zum Drucksensor 6, wobei die mittlere Schallgeschwindigkeit $c_m(t)$ auf der Strecke 11 zeitabhängig ist und auch die Tiefpassfilterung einen Einfluss auf die gemessene Laufzeit hat. Mit Hilfe der Korrektureinheit 8 können sowohl der Einfluss der Laufzeit mit der zeitabhängigen Schallgeschwindigkeit als auch der Einfluss der Tiefpassfilterung zumindest teilweise invertiert werden.

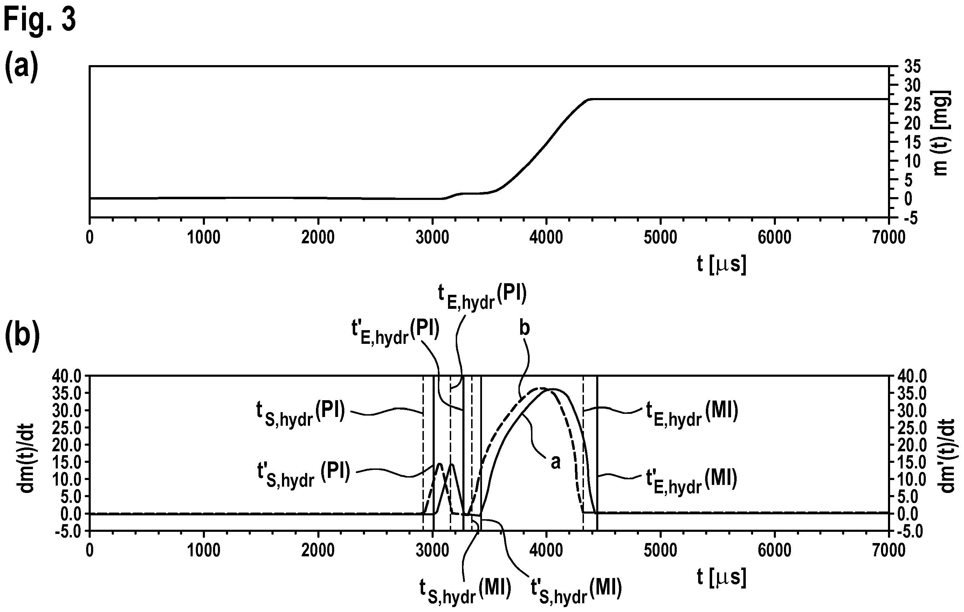

Figur 3a zeigt den Zeitverlauf der durch einen Einspritzvorgang insgesamt in das Messvolumen 3 eingebrachten zusätzlichen Masse m an Fluid 4a. In Figur 3b ist der Zeitverlauf der Einspritzraten dm(t)/dt (linke Skala) bzw. dm'(t)/dt (rechte Skala) über der gleichen Zeitskala aufgetragen. Kurve a wurde mit deaktivierter Korrektureinheit 8 aufgenommen und gibt die gemessene Einspritzrate dm(t)/dt an. Kurve b wurde mit aktivierter Korrektureinheit 8 aufgenommen und gibt die bereinigte Einspritzrate dm'(t)/dt an. Der Einspritzvorgang umfasste eine kleine Voreinspritzung PI und eine daran anschließende, wesentliche größere Haupteinspritzung MI.

Aus dem gemessenen Zeitverlauf der Einspritzrate dm(t)/dt lassen sich Beginn und Ende der Teileinspritzungen PI und MI ablesen. Gemäß Kurve a (ohne Korrektureinheit 8) beginnt die Voreinspritzung PI beim Zeitpunkt $t'_{S,hydr}(PI)$ und endet beim Zeitpunkt $t'_{E,hydr}(PI)$. Die Haupteinspritzung MI beginnt zum Zeitpunkt $t'_{S,hydr}(MI)$ und endet beim Zeitpunkt $t'_{E,hydr}(MI)$.

Beginn und Ende der Teileinspritzungen PI und MI lassen sich aus dem Zeitverlauf der bereinigten Einspritzrate dm'(t)/dt genauer ablesen. Gemäß Kurve b (mit Korrektureinheit 8) beginnt die Voreinspritzung PI beim Zeitpunkt $t_{S,hydr}(PI)$ und endet beim Zeitpunkt $t_{E,hydr}(PI)$. Die Haupteinspritzung MI beginnt zum Zeitpunkt $t_{S,hydr}(MI)$ und endet beim Zeitpunkt $t_{E,hydr}(MI)$.

Der Vergleich der jeweiligen Zeitpunkte zeigt, dass die Korrektureinheit 8 nicht nur einen konstanten Versatz sämtlicher Zeitpunkte entlang der Zeitachse t korrigiert. Vielmehr berücksichtigt sie auch eine Zeitabhängigkeit $c_m(t)$ der mittleren Schallgeschwindigkeit $c_m$ sowie eine Filterverzerrung durch die Auswerteelektronik 7 und kompensiert diese Einflüsse zumindest teilweise, so dass auch eine Verschmierung und Verbreiterung der Einspritzpulse PI und MI korrigiert wird. Dies lässt sich in Figur 3b beispielsweise aus einem Vergleich des Zeitabstands zwischen $t'_{S,hydr}(PI)$ und $t_{S,hydr}(PI)$ einerseits mit dem Zeitabstand zwischen $t'_{E,hydr}(PI)$ und $t_{E,hydr}(PI)$ andererseits ablesen. Der letztere Zeitabstand ist größer als der erstere. Noch deutlicher tritt dieser Unterschied zu Tage, wenn der Zeitabstand zwischen $t'_{S,hydr}(MI)$ und $t_{S,hydr}(MI)$ einerseits mit dem Zeitabstand zwischen $t'_{E,hydr}(MI)$ und $t_{E,hydr}(MI)$ andererseits verglichen wird.

Im Umkehrschluss lassen sich mit aktivierter Korrektureinheit 8 schmalere Einspritzpulse und kürzere Abstände zwischen Einspritzpulsen auflösen. Ein einzelner Einspritzvorgang kann aus bis zu zehn Teileinspritzungen bestehen.

In dem in Figur 3 gezeigten Beispiel wurde das Fluid 4a dem Einspritzventil 2 mit einem Druck $p_{rail}$ von 800 bar zugeführt. Zur Erzeugung der Voreinspritzung PI wurde das Einspritzventil 2 für 220 $\mu s$ elektromagnetisch betätigt. Zur Erzeugung der Haupteinspritzung MI wurde das Einspritzventil 2 für 625 $\mu s$ elektromagnetisch betätigt.

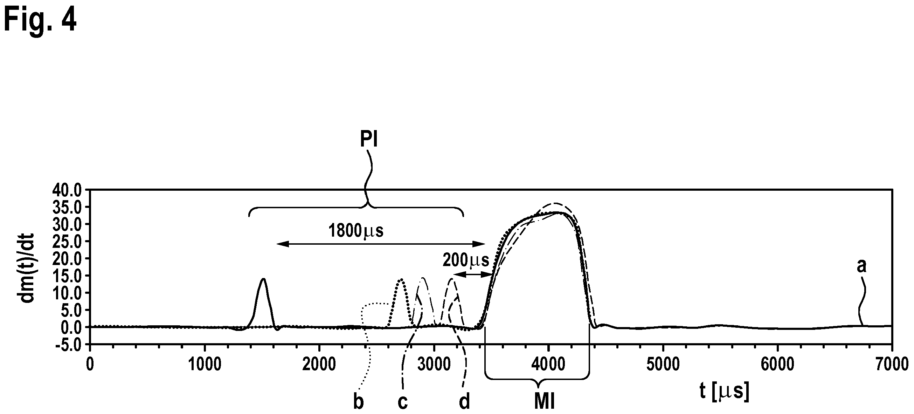

Figur 4 zeigt, wie der in Figur 3 demonstrierte Auflösungsgewinn zur Optimierung der Ansteuerung eines Dieselmotors genutzt werden kann. Aufgetragen ist, wie in Figur 3b, die gemessene Einspritzrate dm(t)/dt über der Zeit t. Kurve a wurde mit deaktivierter Korrektureinheit 8 gemessen und zeigt ein bislang übliches Zeitprogramm für die Einspritzrate dm(t)/dt, bei dem die Voreinspritzung PI der Haupteinspritzung MI um 1800 $\mu s$ vorgelagert ist. Die Kurven b, c und d zeigen künftige Zeitprogramme, bei denen die Voreinspritzung PI der Haupteinspritzung MI um einen wesentlich kürzeren Zeitraum bis hinab zu 200 $\mu s$ (Kurve d) vorgelagert ist und die mit der Korrektureinheit 8 genauer erfasst werden können. Es ist im Hinblick auf die Verbrauchs- und Umwelteigenschaften des Dieselmotors vorteilhaft, die Voreinspritzung PI so nah wie möglich an die Haupteinspritzung MI zu schieben. Das Fluid 4a wurde mit einem Druck $p_{rail}$ von 800 bar dem Einspritzventil 2 zugeführt. Das Einspritzventil 2 wurde für die Erzeugung der Voreinspritzung PI beziehungsweise PI' jeweils für 220 $\mu s$ elektromagnetisch angesteuert. Für die Haupteinspritzung MI wurde das Einspritzventil 2 jeweils für 625 $\mu s$ elektromagnetisch angesteuert.

**Patentansprüche**

1. Vorrichtung (1) zur Messung der Einspritzrate dm(t)/dt eines Einspritzventils (2) für ein Fluid (4a), wobei m(t) die von der Zeit t abhängige Einspritzmenge des Fluids (4a) ist, mit einem Messvolumen (3), das allseitig abgeschlossen ist und mit einem Prüffluid (4) gefüllt ist, einer Öffnung (5a) in einer Wandung (5) des Messvolumens (3) zur Aufnahme des Einspritzventils (2), so dass das Einspritzventil (2) in Einbaulage mit wenigstens einer Einspritzöffnung (2a) in das Messvolumen (3) hineinragt, und einem Drucksensor (6), der im Messvolumen (3) angeordnet ist,
**dadurch gekennzeichnet, dass** Korrekturmittel (8, 8a, 9a, 9b, 9c) zur Bestimmung der Laufzeit einer von der Einspritzöffnung (2a) ausgehenden, sich durch das Prüffluid (4) ausbreitenden Druckwelle (12) zum Drucksensor (6) sowie zur Korrektur der gemessenen Einspritzrate dm(t)/dt unter Berücksichtigung dieser Laufzeit zu einer bereinigten Einspritzrate dm'(t)/dt vorgesehen sind, dass die Korrekturmittel (8, 8a, 9a, 9b, 9c) zur Bestimmung der mittleren Schallgeschwindigkeit $c_m$ auf der Strecke (11) von der Einspritzöffnung (2a) zum Drucksensor (6) während mindestens einer Einspritzung ausgebildet sind, dass die Korrekturmittel (8, 8a, 9a, 9b, 9c) ein Kennfeld (8a) beinhalten, das die mittlere Schallgeschwindigkeit $c_m$ auf der Strecke (11) von der Einspritzöffnung (2a) zum Drucksensor (6) als Funktion des Drucks p im Messvolumen (3) in Kombination mit

    a. der Temperatur T im Messvolumen (3) und/oder
    b. der Einspritzmenge m in Verbindung mit Temperatur $T_{rail}$ und/oder

Druck $p_{rail}$ des Fluids (4a) vor dem Eintritt in das Einspritzventil (2) angibt und dass das Kennfeld (8a) durch eine fluiddynamische Simulation der zeit- und ortsabhängigen lokalen Schallgeschwindigkeit c(t,x) in einem Teilvolumen des Messvolumens (3), das mindestens die Strecke (11) von der Einspritzöffnung (2a) zum Drucksensor (6) umfasst, bestimmt wird, die von mindestens einer zeitabhängigen Randbedingung für den Druck p im Messvolumen (3) und/oder für die Einspritzmenge m ausgeht.

2. Vorrichtung (1) nach Anspruch 1, **dadurch gekennzeichnet, dass** eine Auswerteeinheit (7) zur Filterung von Rauschen aus den Messwerten des Drucksensors (6) zwischen den Drucksensor (6) und die Korrekturmittel (8, 8a, 9a, 9b, 9c) geschaltet ist.

3. Vorrichtung (1) nach Anspruch 2, **dadurch gekennzeichnet, dass** die Korrekturmittel (8, 8a, 9a, 9b, 9c) dazu ausgebildet sind, eine durch die Filterung bewirkte zeitliche Verschiebung der Messwerte des Drucksensors (6) zumindest teilweise zu kompensieren.

4. Vorrichtung (1) nach einem der Ansprüche 1 bis 3, **dadurch gekennzeichnet, dass** zusätzlich Mittel (15) zur Bestimmung des hydraulischen Spritzbeginns $t_{S,hydr}$ des Einspritzventils (2) aus der bereinigten Einspritzrate dm'(t)/dt vorgesehen sind.

5. Vorrichtung (1) nach einem der Ansprüche 1 bis 4, **dadurch gekennzeichnet, dass** zusätzlich mindestens ein Ultraschallsensor (10) zur Bestimmung der mittleren Schallgeschwindigkeit $c_{m,mess}$ im Prüffluid (4) vor und/oder nach der Einspritzung im Messvolumen (3) angeordnet ist.

6. Vorrichtung nach einem der Ansprüche 1 bis 5, **dadurch gekennzeichnet, dass** das Teilvolumen des Messvolumens (3) bis zu einer Wandung (5) des Messvolumens (3) reicht und die Simulation eine zumindest teilweise Reflexion der von der Einspritzöffnung (2a) ausgehenden Druckwelle (12) an dieser Wandung (5) berücksichtigt.

7. Vorrichtung nach einem der Ansprüche 1 bis 6, **dadurch gekennzeichnet, dass** die Simulation das Vorhandensein und/oder eine Ausbildung von Kavitation im Prüffluid (4) berücksichtigt.

8. Vorrichtung nach einem der Ansprüche 1 bis 7, **dadurch gekennzeichnet, dass** die Simulation eine Temperaturabhängigkeit und/oder eine Druckabhängigkeit der Viskosität und/oder des Kompressionsmoduls des Prüffluids (4), und/oder der Schallgeschwindigkeit im Prüffluid (4), berücksichtigt.

9. Verfahren zur Messung der Einspritzrate dm(t)/dt eines Einspritzventils (2) für ein Fluid (4a), wobei m(t) die zeitabhängige Einspritzmenge ist, unter Nutzung eines Messvolumens (3), das allseitig abgeschlossen ist und mit einem Prüffluid (4) gefüllt ist, wobei dieses Messvolumen (3) eine Öffnung (5a) in einer Wandung (5) zur Aufnahme des Einspritzventils (2) aufweist, so dass das Einspritzventil (2) in Einbaulage mit wenigstens einer Einspritzöffnung (2a) in das Messvolumen (3) hineinragt, und einem Drucksensor (6), der im Messvolumen (3) angeordnet ist, wobei mit dem Drucksensor (6) der zeitliche Verlauf des Drucks im Messvolumen (3) als Reaktion auf ein Zeitprogramm I(t) der Ansteuerung des Einspritzventils (2) gemessen wird,
**dadurch gekennzeichnet, dass** mit Korrekturmitteln (8, 8a, 9a, 9b, 9c) die Laufzeit einer von der Einspritzöffnung (2a) ausgehenden, sich durch das Prüffluid (4) ausbreitenden Druckwelle (12) zum Drucksensor (6) bestimmt wird und dass die gemessene Einspritzrate dm(t)/dt um den Einfluss dieser Laufzeit zu einer Einspritzrate dm'(t)/dt bereinigt wird, dass mit den Korrekturmitteln (8, 8a, 9a, 9b, 9c) die mittlere Schallgeschwindigkeit $c_m$ auf der Strecke (11) von der Einspritzöffnung (2a) zum Drucksensor (6) während mindestens einer Einspritzung bestimmt wird, dass die Korrekturmittel (8, 8a, 9a, 9b, 9c) ein Kennfeld (8a) beinhalten, mit dem die mittlere Schallgeschwindigkeit $c_m$ auf der Strecke (11) von der Einspritzöffnung (2a) zum Drucksensor (6) als Funktion des Drucks p im Messvolumen (3) in Kombination mit

    a. der Temperatur T im Messvolumen (3) und/oder
    b. der Einspritzmenge m in Verbindung mit Temperatur $T_{rail}$ und/oder

Druck $p_{rail}$ des Fluids (4a) vor dem Eintritt in das Einspritzventil (2) angegeben wird, und dass das Kennfeld (8a) durch eine fluiddynamische Simulation der zeit- und ortsabhängigen lokalen Schallgeschwindigkeit c(t,x) in einem Teilvolumen des Messvolumens (3), das mindestens die Strecke (11) von der Einspritzöffnung (2a) zum Drucksensor (6) umfasst, bestimmt wird, die von mindestens einer zeitabhängigen Randbedingung für den Druck p im Messvolumen (3) und/oder für die Einspritzmenge m ausgeht.

**Claims**

1. Device (1) for measuring the injection rate dm(t)/dt of an injection valve (2) for a fluid (4a), wherein m(t) is the injection quantity of the fluid (4a), said injection quantity being dependent on the time t, said device having a measuring volume (3) which is enclosed on all sides and is filled with a test fluid (4), an opening (5a) in a wall (5) of the measuring volume (3) for receiving the injection valve (2) with the result that in the installed position the injection valve (2) protrudes with at least one injection opening (2a) into the measuring volume (3), and a pressure sensor (6) which is arranged in the measuring volume (3), **characterized in that** correcting means (8, 8a, 9a, 9b, 9c) are provided for determining the propagation time of a pressure wave (12) which starts at the injection opening (2a) and propagates through the test fluid (4) to the pressure sensor (6) and also to correct the measured injection rate dm(t)/dt to an adjusted injection rate dm'(t)/dt taking into account said propagation time, **in that** the correcting means (8, 8a, 9a, 9b, 9c) are designed to determine the average speed of sound $c_m$ along the path (11) from the injection opening (2a) to the pressure sensor (6) during at least one injection procedure, **in that** the correcting means (8, 8a, 9a, 9b, 9c) include a characteristic diagram (8a) which specifies the average speed of sound $c_m$ along the path (11) from the injection opening (2a) to the pressure sensor (6) as a function of the pressure p in the measuring volume (3) in combination with

    a. the temperature T in the measuring volume (3) and/or
    b. the injection quantity m in conjunction with the temperature $T_{rail}$ and/or pressure $p_{rail}$ of the fluid (4a) prior to entering the injection valve (2), and **in that** that the characteristic diagram (8a) is determined by means of a fluid-dynamic simulation of the time-dependent and location-dependent local speed of sound c(t,x) in a part volume of the measuring volume (3) which comprises at least one path (11) from the injection opening (2a) to the pressure sensor (6), said simulation being based on at least one time-dependent boundary condition for the pressure p in the measuring volume (3) and/or for the injection quantity m.

2. Device (1) according to Claim 1, **characterized in that** an evaluating unit (7) for filtering noise from the measuring values of the pressure sensor (6) is connected between the pressure sensor (6) and the correcting means (8, 8a, 9a, 9b, 9c).

3. Device (1) according to Claim 2, **characterized in that** the correcting means (8, 8a, 9a, 9b, 9c) are designed to at least partially compensate a temporal shift of the measuring values of the pressure sensor (6), said temporal shift being caused by the filtering procedure.

4. Device (1) according to one of Claims 1 to 3, **characterized in that** in addition means (15) for determining the hydraulic start of injection $t_{S,hydr}$ of the injection valve (2) from the adjusted injection rate dm'(t)/dt are provided.

5. Device (1) according to one of Claims 1 to 4, **characterized in that** in addition at least one ultrasonic sensor (10) is arranged in the measuring volume (3) so as to determine the average speed of sound $c_{m,mess}$ in the test fluid (4) prior to and/or after the injection procedure.

6. Device according to one of Claims 1 to 5, **characterized in that** the part volume of the measuring volume (3) extends as far as a wall (5) of the measuring volume (3) and the simulation takes into account an at least partial reflection of the pressure wave (12) at this wall (5), said pressure wave starting from the injection opening (2a).

7. Device according to one of Claims 1 to 6, **characterized in that** the simulation takes into account the presence and/or a formation of cavitation in the test fluid (4).

8. Device according to one of Claims 1 to 7, **characterized in that** the simulation takes into account a temperature dependency and/or a pressure dependency of the viscosity and/or the compression module of the test fluid (4), and/or the speed of sound in the test fluid (4).

9. Method for measuring the injection rate dm(t)/dt of an injection valve (2) for a fluid (4a), wherein m(t) is the time-dependent injection quantity when using a measuring volume (3) which is enclosed on all sides and is filled with a test fluid (4), wherein said measuring volume (3) comprises an opening (5a) in a wall (5) for receiving the injection valve (2) with the result that in the installed position the injection valve (2) protrudes with at least one injection opening (2a) into the measuring volume (3), and a pressure sensor (6) which is arranged in the measuring volume (3), wherein the temporal curve of the pressure in the measuring volume (3) is measured using the pressure sensor (6) as a reaction to a time program I(t) of the actuation of the injection valve (2), **characterized in that** the propagation time of a pressure wave (12) which starts at the injection opening (2a) and propagates through the test fluid (4) to the pressure sensor (6) is determined using correcting means (8, 8a, 9a, 9b, 9c), and **in that** the measured injection rate dm(t)/dt is adjusted under the influence of this propagation time to an injection rate dm'(t)/dt, **in that** the average speed of sound $c_m$ along the path (11) from the injection opening (2a) to the pressure sensor (6) is determined using the correcting means (8, 8a, 9a, 9b, 9c) during at least one injection procedure, **in that** the correcting means (8, 8a, 9a, 9b, 9c) include a characteristic diagram (8a) with which the average speed of sound $c_m$ along the path (11) from the injection opening (2a) to the pressure sensor (6) as a function of the pressure p in the measuring volume (3) in combination with

     a. the temperature T in the measuring volume (3) and/or
     b. the injection quantity m in conjunction with the temperature $T_{rail}$ and/or pressure $p_{rail}$ of the fluid (4a) prior to entering the injection valve (2) is specified, and **in that** that the characteristic diagram (8a) is determined by means of a fluid-dynamic simulation of the time-dependent and location-dependent local speed of sound c(t,x) in a part volume of the measuring volume (3) which comprises at least one path (11) from the injection opening (2a) to the pressure sensor (6), said simulation being based on at least one time-dependent boundary condition for the pressure p in the measuring volume (3) and/or for the injection quantity m.

## Revendications

1. Dispositif (1) de mesure du taux d'injection dm(t)/dt d'une soupape d'injection (2) pour un fluide (4a), où m(t) est la quantité d'injection, dépendante du temps t, du fluide (4a), comprenant un volume de mesure (3), qui est fermé de tous côtés et est rempli d'un fluide de test (4), une ouverture (5a) dans une paroi (5) du volume de mesure (3) pour la réception de la soupape d'injection (2), de sorte que la soupape d'injection (2) pénètre, dans la position d'installation, par au moins une ouverture d'injection (2a) dans le volume de mesure (3), et un capteur de pression (6) qui est disposé dans le volume de mesure (3), **caractérisé en ce que** des moyens de correction (8, 8a, 9a, 9b, 9c) sont prévus pour la détermination du temps de propagation d'une onde de pression (12) partant de l'ouverture d'injection (2a), se propageant à travers le fluide de test (4), jusqu'au capteur de pression (6) ainsi que pour la correction du taux d'injection mesuré dm(t)/dt en prenant en compte ce temps de propagation pour obtenir un taux d'injection corrigé dm'(t)/dt, **en ce que** les moyens de correction (8, 8a, 9a, 9b, 9c) sont conçus pour la détermination de la vitesse du son moyenne $c_m$ sur le trajet (11) allant de l'ouverture d'injection (2a) jusqu'au capteur de pression (6) pendant au moins une injection, **en ce que** les moyens de correction (8, 8a, 9a, 9b, 9c) comportent un diagramme caractéristique (8a) qui indique la vitesse du son moyenne $c_m$ sur le trajet (11) allant de l'ouverture d'injection (2a) au capteur de pression (6) en fonction de la pression p dans le volume de mesure (3) en combinaison avec

     a. la température T dans le volume de mesure (3) et/ou
     b. la quantité d'injection m en association avec la température $T_{rail}$ et/ou la pression $p_{rail}$ du fluide (4a) avant l'entrée dans la soupape d'injection (2) et **en ce que** le diagramme caractéristique (8a) est déterminé par une simulation de dynamique des fluides de la vitesse du son locale c(t,x) dépendante du temps et de l'emplacement dans un volume partiel du volume de mesure (3) qui comporte au moins le trajet (11) allant de l'ouverture d'injection (2a) au capteur de pression (6), laquelle simulation est basée sur au moins une condition aux limites, dépendante du temps, pour la pression p dans le volume de mesure (3) et/ou pour la quantité d'injection m.

2. Dispositif (1) selon la revendication 1, **caractérisé en ce qu'**une unité d'évaluation (7) pour le filtrage de bruits dans les valeurs de mesure du capteur de pression (6) est disposée entre le capteur de pression (6) et les moyens de correction (8, 8a, 9a, 9b, 9c).

**3.** Dispositif (1) selon la revendication 2, **caractérisé en ce que** les moyens de correction (8, 8a, 9a, 9b, 9c) sont conçus pour compenser au moins partiellement un décalage temporel, provoqué par le filtrage, des valeurs de mesure du capteur de pression (6).

**4.** Dispositif (1) selon l'une des revendications 1 à 3, **caractérisé en ce qu'**en outre des moyens (15) de détermination du début d'injection hydraulique $t_{S,hydr}$ de la soupape d'injection (2) à partir du taux d'injection corrigé dm'(t)/dt sont prévus.

**5.** Dispositif (1) selon l'une des revendications 1 à 4, **caractérisé en ce qu'**en outre au moins un capteur à ultrasons (10) pour la détermination de la vitesse du son moyenne $c_{m,mess}$ dans le fluide de test (4) avant et/ou après l'injection est disposé dans le volume de mesure (3).

**6.** Dispositif selon l'une des revendications 1 à 5, **caractérisé en ce que** le volume partiel du volume de mesure (3) s'étend jusqu'à une paroi (5) du volume de mesure (3) et la simulation prend en compte une réflexion au moins partielle de l'onde de pression (12), partant de l'ouverture d'injection (2a), au niveau de cette paroi (5).

**7.** Dispositif selon l'une revendications 1 à 6, **caractérisé en ce que** la simulation prend en compte la présence et/ou une formation de cavitation dans le fluide de test (4).

**8.** Dispositif selon l'une des revendications 1 à 7, **caractérisé en ce que** la simulation prend en compte une dépendance vis-à-vis de la température et/ou une dépendance vis-à-vis de la pression de la viscosité et/ou du module de compression du fluide de test (4), et/ou de la vitesse du son dans le fluide de test (4).

**9.** Procédé de mesure du taux d'injection dm(t)/dt d'une soupape d'injection (2) pour un fluide (4a), où m(t) est la quantité d'injection dépendante du temps, à l'aide d'un volume de mesure (3), qui est fermé de tous côtés et est rempli d'un fluide de test (4), dans lequel ce volume de mesure (3) comprend une ouverture (5a) dans une paroi (5) pour la réception de la soupape d'injection (2), de sorte que la soupape d'injection (2) pénètre, dans la position d'installation, par au moins une ouverture d'injection (2a) dans le volume de mesure (3), et un capteur de pression (6) qui est disposé dans le volume de mesure (3), dans lequel l'allure temporelle de la pression dans le volume de mesure (3) est mesurée, à l'aide du capteur de pression (6), en réaction à un programme temporel I(t) de la commande de la soupape d'injection (2),

**caractérisé en ce qu'**à l'aide de moyens de correction (8, 8a, 9a, 9b, 9c), le temps de propagation d'une onde de pression (12) partant de l'ouverture d'injection (2a), se propageant à travers le fluide de test (4), jusqu'au capteur de pression (6) est déterminé et **en ce que** le taux d'injection mesuré dm(t)/dt est corrigé vis-à-vis de l'influence de ce temps de propagation pour obtenir un taux d'injection dm'(t)/dt, **en ce qu'**à l'aide des moyens de correction (8, 8a, 9a, 9b, 9c), la vitesse du son moyenne $c_m$ sur le trajet (11) allant de l'ouverture d'injection (2a) jusqu'au capteur de pression (6) pendant au moins une injection est déterminée, **en ce que** les moyens de correction (8, 8a, 9a, 9b, 9c) comportent un diagramme caractéristique (8a) à l'aide duquel la vitesse du son moyenne $c_m$ sur le trajet (11) allant de l'ouverture d'injection (2a) au capteur de pression (6) est indiquée en fonction de la pression p dans le volume de mesure (3) en combinaison avec

a. la température T dans le volume de mesure (3) et/ou

b. la quantité d'injection m en association avec la température $T_{rail}$ et/ou la pression $p_{rail}$ du fluide (4a) avant l'entrée dans la soupape d'injection (2), et **en ce que** le diagramme caractéristique (8a) est déterminé par une simulation de dynamique des fluides de la vitesse du son locale c(t,x) dépendante du temps et de l'emplacement dans un volume partiel du volume de mesure (3) qui comporte au moins le trajet (11) allant de l'ouverture d'injection (2a) au capteur de pression (6), laquelle simulation est basée sur au moins une condition aux limites, dépendante du temps, pour la pression p dans le volume de mesure (3) et/ou pour la quantité d'injection m.

**Fig. 1**

# Fig. 2

**(a)**

**(b)**

EP 3 298 266 B1

Fig. 3

(a)

(b)

EP 3 298 266 B1

EP 3 298 266 B1

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10249754 A1
- DE 102005056153 A1
- JP 2014224466 A